# EUROPÄISCHE PATENTSCHRIFT

(11) **EP 3 153 372 B1**
(45) Veröffentlichungstag und Bekanntmachung des Hinweises auf die Patenterteilung: **18.03.2020**
(21) Anmeldenummer: 16001776.0
(22) Anmeldetag: 10.08.2016
(51) Int. Cl.: B60W 30/18, B60W 10/06, B60W 10/196

(54) **BETRIEBSVERFAHREN UND VORRICHTUNG ZUR STEUERUNG ODER REGELUNG FÜR EIN DAUERBREMSSYSTEM EINES FAHRZEUGS**
METHOD OF OPERATION AND DEVICE FOR CONTROLLING OR REGULATING FOR A LONG-TERM BRAKING SYSTEM OF A VEHICLE
PROCEDE DE FONCTIONNEMENT ET DISPOSITIF DE COMMANDE OU DE REGLAGE D'UN SYSTEME DE FREINAGE PERMANENT D'UN VEHICULE AUTOMOBILE

(30) Priorität: 01.10.2015 DE 102015012735
(43) Veröffentlichungstag der Anmeldung: 12.04.2017
(73) Patentinhaber: MAN Truck & Bus SE, 80995 München (DE)
(72) Erfinder: Palm, Rüdiger, 81541 München (DE)
(74) Vertreter: v. Bezold & Partner Patentanwälte - PartG mbB

(56) Entgegenhaltungen:
- EP-A1- 2 123 500
- EP-A1- 2 412 955
- WO-A1-2008/008005
- WO-A1-2014/064524
- DE-B3-102013 225 954
- US-A1- 2007 137 200

## Beschreibung

Die Erfindung betrifft ein Betriebsverfahren für ein Dauerbremssystem eines Kraftfahrzeugs. Die Erfindung betrifft ferner eine Vorrichtung zur Steuerung oder Regelung eines Dauerbremssystems eines Fahrzeugs.

Aus dem Stand der Technik sind Dauerbremssysteme für Kraftfahrzeuge bekannt. Eine Dauerbremse ist eine Einrichtung, die länger andauerndes und auch verschleißfreies Bremsen ermöglicht, ohne in ihrer Bremsleistung nachzulassen. Die verschiedenen Dauerbremsen werden in primäre und sekundäre Dauerbremsen unterteilt. Eine primäre Dauerbremse ist motorseitig im Kraftfluss vor dem Getriebe angeordnet. Primäre Dauerbremsen wirken üblicherweise über die Kurbelwelle des Motors und sind daher drehzahlabhängig. Beispiele für primäre Dauerbremsen sind Motorbremsen, z. B. als Auspuffklappenbremsen, als ventilgesteuerte Dauerbremsen und/oder als Turbosysteme. Sekundäre Dauerbremsen sind im Kraftfluss hinter dem Getriebe angeordnet, beispielsweise an der Kardanwelle, und umfassen beispielsweise hydraulisch wirkende Retarder oder Wirbelstrombremsen. Sekundäre Dauerbremsen sind oftmals geschwindigkeitsabhängig. Zu den sekundären Dauerbremsen zählen die hydrodynamische Strömungsbremse und die elektromagnetische Wirbelstrombremse.

Aus der Praxis sind ferner primäre Dauerbremsen bekannt, die bezüglich der Reaktionszeit einen schnellen und einen langsamen Anteil aufweisen, die jeweils getrennt angesteuert werden können. Umfasst das Dauerbremssystem des Kraftfahrzeugs sowohl eine primäre Dauerbremse mit in Bezug auf die Reaktionszeit unterschiedlich schnellen Anteilen als auch eine sekundäre Dauerbremse, stellt sich die Aufgabe, wie ein möglichst vorteilhaftes Zusammenspiel dieser drei Dauerbremskomponenten realisiert werden kann, um in Abhängigkeit von einer Dauerbremsen-Bremsanforderung ein entsprechendes Dauerbremsmoment zu erzeugen.

Aus der Offenlegungsschrift WO 2008/008005 A1 ist ein Verfahren und System zum Betrieb einer Motorbremse bekannt, bei dem mittels eines Regelkreises sichergestellt wird, dass ein tatsächlich aufgebrachtes Dauerbremsmoment auf eine vorgegebene Dauerbremsen-Bremsanforderung eingeregelt wird. Aus der EP 2 123 500 A1 ist ein Verfahren zur Ermittlung der Ein- und Ausschaltbedingung für eine Motorbremseinrichtung einer Dauerbremsanlage eines Fahrzeugs bekannt, bei dem in Abhängigkeit von vorgegebenen Fahrparametern ein Dauerbremsmoment an einer Abtriebswelle eines Antriebsstrangs mittels eines von einer Steuereinrichtung der Dauerbremsanlage von einer Motorbremseinrichtung und von einer Retardereinrichtung angeforderten Bremsmoments eingestellt wird, wobei die Aktivierung und Deaktivierung der Motorbremseinrichtung in Abhängigkeit von wenigstens einem in Abhängigkeit von einer Abtriebswellendrehzahl der Abtriebswelle ermittelten Momentenschwellenwert vorgegeben werden.

Es ist somit eine erste Aufgabe der Erfindung, ein Betriebsverfahren für ein derartiges Dauerbremssystem bereitzustellen, mit dem Nachteile herkömmlicher Techniken vermieden werden können. Die Aufgabe der Erfindung ist es insbesondere, ein Betriebsverfahren bereitzustellen, mit dem eine Reaktionszeit des Dauerbremssystems verbessert und/oder der Wärmeeintrag des Dauerbremssystems möglichst gering gehalten wird. Eine weitere Aufgabe ist es, eine Vorrichtung zur Steuerung oder Regelung eines derartigen Dauerbremssystems bereitzustellen, mit dem Nachteile herkömmlicher Techniken vermieden werden können.

Diese Aufgaben werden durch Vorrichtungen und Betriebsverfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Betriebsverfahren für ein Dauerbremssystem eines Kraftfahrzeugs bereitgestellt.

Das Dauerbremssystem umfasst dabei in an sich bekannter Weise eine primäre Dauerbremse und eine sekundäre Dauerbremse. Die sekundäre Dauerbremse ist ein Sekundärretarder. Die primäre Dauerbremse weist ferner eine erste primäre Dauerbremseinrichtung zur Erzeugung eines einstellbaren ersten Bremsmomentanteils bzw. ersten Bremskraftanteils und eine zweite primäre Dauerbremseinrichtung zur Erzeugung eines einstellbaren zweiten Bremsmomentanteils bzw. zweiten Bremskraftanteils auf, wobei die erste im Vergleich zur zweiten primären Dauerbremseinrichtung ein schnelleres Ansprechverhalten aufweist. Mit anderen Worten weist die primäre Dauerbremse bezüglich der Reaktionszeit, d. h. wie schnell ein Bremsmoment in Reaktion auf eine Bremsmomentvorgabe aufgebaut werden kann, einen schnellen und einen langsamen Anteil auf. Das insgesamt von der primären Dauerbremse erzeugbare bzw. erzeugte Bremsmoment ergibt sich somit durch die Summe der beiden Anteile. Mittels der sekundären Dauerbremse ist ein weiterer Bremsmomentanteil bzw. Bremskraftanteil einstellbar. Dieser Bremsmomentanteil wird nachfolgend als dritter Bremsmomentanteil bezeichnet.

Beispielsweise sind primäre Dauerbremsen bekannt, die einen ersten Bremsmomentanteil durch Steuerung einer Motorstaubremse erzeugen können, die eine im Abgasstrang angeordnete und im Motorbremsbetrieb regelbare Motorstauklappe aufweist, über die ein Abgasgegendruck erzeugbar ist. Zur Einstellung des ersten Bremsmomentanteils wird ein Anstellwinkel der Motorstauklappe eingestellt. Die primäre Dauerbremse bzw. die Motorbremse kann auch als Dekompressionsbremse ausgeführt sein. Der erste Bremsmomentanteil kann auch durch eine Kombination einer Motorstaubremse und Dekompressionsbremse erfolgen (beispielsweise als sog. Exhaust Valve Brake bezeichnet). Eine solche Mischform aus einer Motorstaubremse und einer Dekompressionsbremse ist beispielsweise aus der DE 2008 061 412 A1 bekannt.

Dieser erste Anteil stellt den bezüglich der Reaktionszeit schnellen Anteil dar. Die primäre Dauerbremse kann ferner ein Abgasturbosystem umfassen, mittels dessen im Dauerbremsbetrieb, in dem die Kraftstoffpumpe auf Nullförderung oder Leerlaufförderung geschaltet wird, durch Regelung des Ladedrucks und dadurch der Verdichtungsarbeit ein zusätzlicher Bremsmomentanteil erzeugbar ist. Dieser zusätzliche Anteil stellt den bezüglich der Reaktionszeit langsameren Anteil dar, da es einige Sekunden dauern kann, bis sich der gewünschte Lade- oder Staudruck gemäß einer Steuer-oder Regelvorgabe auf- bzw. wieder abgebaut hat.

Eine derartige Motorbremseinrichtung ist beispielsweise in der noch unveröffentlichten Patentanmeldung A910/2014 beschrieben.

Es wird jedoch betont, dass die primäre Dauerbremse nicht auf diese Ausführungsform beschränkt ist, sondern die Erfindung sich auf alle primäre Dauerbremsen anwenden lässt, deren maximal erzeugbares Bremsmoment sich aus einem ersten Anteil und einem zweiten Anteil zusammensetzt, die in Bezug auf das Ansprechverhalten unterschiedlich schnell sind.

Die ersten, zweiten und dritten Bremsmomentanteile werden derart festgelegt, dass das Dauerbremssystem ein Bremsmoment in Höhe einer Dauerbremsen-Bremsanforderung erzeugt. Die Dauerbremsen-Bremsanforderung stellt eine Sollwertvorgabe dar, die die Höhe eines von dem Dauerbremssystem aufzubringenden Bremsmomentes angibt. Die Dauerbremsen-Bremsanforderung kann beispielsweise von einem Fahrzeuglängsregelsystem oder einer Geschwindigkeitsregelanlage erzeugt werden.

Erfindungsgemäß wird zu Beginn einer Dauerbremsung versucht, die Dauerbremsen-Bremsanforderung komplett durch den schnellen Anteil der primären Dauerbremse darzustellen.

Entsprechend wird erfindungsgemäß ein Betriebsverfahren für ein gattungsgemäßes Dauerbremssystem vorgeschlagen, bei dem in einem Zeitraum nach Aktivierung eines Dauerbremsbetriebs und bis eine Dauerbremsen-Bremsanforderung nach Aktivierung des Dauerbremsbetriebs einen ersten Schwellenwert erstmalig überschreitet, die Dauerbremsen-Bremsanforderung von der ersten primären Dauerbremseinrichtung, d. h. dem schnellen Anteil, aufgebracht wird. Der erste Schwellenwert ist so festgelegt ist, dass er einem Wert entspricht, der kleiner oder gleich einem maximal von der ersten primären Dauerbremseinrichtung erzeugbaren Bremsmoment ist. Der erste Schwellenwert kann drehzahlabhängig sein.

Die Verwendung des schnellen Anteils der primären Dauerbremse bietet gegenüber der Verwendung des langsamen Anteils den Vorteil einer schnelleren Reaktionszeit. Ferner erzeugt die primäre Dauerbremse in der Regel einen geringeren Wärmeeintrag in das Kühlsystem des Fahrzeugs als die sekundäre Dauerbremse. Die sekundäre Dauerbremse stellt zudem bei geringen Geschwindigkeiten wenig Bremsmoment zur Verfügung, so dass die Verwendung des schnellen Anteils der primären Dauerbremse ferner den Vorteil bietet, dass bei Beginn einer Dauerbremsung unabhängig von der Fahrzeuggeschwindigkeit ein Bremsmoment bis zum ersten Schwellenwert erzeugbar ist.

Ferner wird vorgeschlagen, dass falls und/oder nachdem die Dauerbremsen-Bremsanforderung den ersten Schwellenwert erstmalig überschritten hat und solange die Dauerbremsen-Bremsanforderung einen zweiten Schwellenwert nach Aktivierung eines Dauerbremsbetriebs noch nicht überschritten hat, ein den ersten Schwellenwert übersteigender Anteil der Dauerbremsen-Bremsanforderung durch die sekundäre Dauerbremse aufgebracht wird. Der zweite Schwellenwert ist so festgelegt, dass er einem Wert entspricht, der kleiner oder gleich einem Bremsmoment ist, das bei einem Zusammenwirken der ersten primären Dauerbremseinrichtung mit der sekundären Dauerbremse maximal erzeugbar ist. Wenn der schnelle Anteil der primären Dauerbremse somit nicht ausreicht, um das geforderte Bremsmoment zu erzeugen, wird das restliche Bremsmoment durch die sekundäre Dauerbremse ausgeregelt. Hierbei kann in vorteilhafter Weise ausgenutzt werden, dass die sekundäre Dauerbremse schnell und fein regelbar arbeitet.

Unter einer Aktivierung des Dauerbremsbetriebs wird ein Einschalten des Dauerbremssystems verstanden bzw. der Beginn der Betriebsphase des Fahrzeugs, während derer ein Dauerbremsmoment größer null von dem Dauerbremssystem aufgebracht werden muss.

Gemäß einer Ausführungsform der Erfindung kann nach erstmaligem Überschreiten des zweiten Schwellenwertes nach Aktivierung eines Dauerbremsbetriebs die zweite primäre Dauerbremseinrichtung aktiviert werden und somit den zweiten Bremsmomentanteil erzeugen, der so eingestellt wird, dass er der Differenz zwischen Dauerbremsen-Bremsanforderung und der Summe aus erstem Bremsmomentanteil und drittem Bremsmomentanteil entspricht. Wenn somit die Bremsanforderung den zweiten Schwellenwert erstmalig überschreitet und somit nicht mehr durch die Summe der sekundären Dauerbremse und des schnellen Anteils der primären Dauerbremse dargestellt werden kann, wird der langsame Anteil der primären Dauerbremse angesteuert.

Unter einer Aktivierung der ersten oder zweiten Dauerbremseinrichtung oder der sekundären Dauerbremse wird beispielsweise der Zeitpunkt verstanden, ab dem das jeweilige Stellglied der Dauerbremseinrichtung von einem Zustand, in dem die Dauerbremseinrichtung kein Bremsmomentanteil erzeugt, in einen Zustand verstellt wird, der einem vorbestimmten Bremsmomentanteil entspricht, um einen Bremsmomentanteil zum angeforderten Dauerbremsen-Bremsanforderung beizutragen.

Bei einer vorteilhaften Variante dieser Ausgestaltungsform bleibt die sekundäre Dauerbremse, nachdem sie aktiviert wurde, bei einer nachfolgenden Verringerung der Dauerbremsen-Bremsanforderung länger als die Bremseinrichtungen der primären Dauerbremse aktiviert. Mit anderen Worten soll die sekundäre Dauerbremse, wenn sie erst einmal wirksam ist, bei einer Verringerung der Dauerbremsen-Bremsanforderung so lange wie möglich angesteuert bleiben, insbesondere länger als die primäre Dauerbremse. Dadurch kann die Anzahl von Ein- und Ausschaltvorgängen der sekundären Dauerbremse verringert werden, was aus Komfortgesichtspunkten vorteilhaft ist.

Bei einem Rückgang der Dauerbremsen-Bremsanforderung wird daher vorzugsweise der von der sekundären Dauerbremse erzeugte dritte Bremsmomentanteil und/oder der von der primären Dauerbremse erzeugte Bremsmomentanteil reduziert, anstatt die sekundäre Dauerbremse komplett auszuschalten.

Gemäß einer weiteren bevorzugten Ausgestaltungsform wird eine nach einer Aktivierung der zweiten primären Dauerbremseinrichtung auftretende Verringerung der Dauerbremsen-Bremsanforderung solange durch die sekundäre Dauerbremse und/oder die erste primäre Dauerbremseinrichtung ausgeregelt und der eingestellte zweite Bremskraftanteil konstant gehalten, bis der Wert der Dauerbremsen-Bremsanforderung unter einen Wert sinkt, der einer Höhe des momentan eingestellten zweiten Bremskraftanteils der zweiten primären Dauerbremseinrichtung entspricht. Ist der langsame Anteil der primären Dauerbremse erst einmal wirksam bzw. aktiviert, dann soll dieser, auch wenn die Dauerbremsen-Bremsanforderung wieder sinkt, so lange wie möglich seinen Wert halten. Auf diese Weise können Aus- und Wiedereinschaltvorgänge der zweiten primären Dauerbremseinrichtung und der dadurch bedingte vergleichsweise hohe zeitliche Verzug verhindert werden.

Gemäß einem zweiten Gesichtspunkt der Erfindung wird eine Vorrichtung zur Steuerung oder Regelung für ein Dauerbremssystem eines Kraftfahrzeugs bereitgestellt. Das Dauerbremssystem umfasst wiederum, wie vorstehend für das Betriebsverfahren beschrieben, eine primäre Dauerbremse und eine sekundäre Dauerbremse, wobei die primäre Dauerbremse einen schnellen und langsamen Anteil aufweist. Die Vorrichtung ist eingerichtet, das Betriebsverfahren für das Dauerbremssystem, wie in diesem Dokument beschrieben, auszuführen.

Die Vorrichtung ist insbesondere eingerichtet, in Abhängigkeit von einer Dauerbremsen-Bremsanforderung die primäre Dauerbremse und die sekundäre Dauerbremse so anzusteuern, dass in einem Zeitraum nach Aktivierung eines Dauerbremsbetriebs und bis eine Dauerbremsen-Bremsanforderung nach Aktivierung des Dauerbremsbetriebs einen ersten Schwellenwert erstmalig überschreitet, die Dauerbremsen-Bremsanforderung ausschließlich von der ersten primären Dauerbremseinrichtung aufgebracht wird. Der erste Schwellenwert ist wiederum so festgelegt, dass er einem Wert entspricht, der kleiner oder gleich einem maximal von der ersten primären Dauerbremseinrichtung erzeugbaren Bremsmoment ist. Ferner ist die Vorrichtung eingerichtet, in Abhängigkeit von einer Dauerbremsen-Bremsanforderung die primäre Dauerbremse und die sekundäre Dauerbremse so anzusteuern, dass nachdem die Dauerbremsen-Bremsanforderung den ersten Schwellenwert erstmalig überschritten hat und solange die Dauerbremsen-Bremsanforderung einen zweiten Schwellenwert nach Aktivierung eines Dauerbremsbetriebs noch nicht überschritten hat, ein den ersten Schwellenwert übersteigender Anteil der Dauerbremsen-Bremsanforderung durch die sekundäre Dauerbremse aufgebracht wird. Der zweite Schwellenwert ist wiederum so festgelegt, dass er einem Wert entspricht, der kleiner oder gleich einem Bremsmoment ist, das bei einem Zusammenwirken der ersten primären Dauerbremseinrichtung mit der sekundären Dauerbremse maximal erzeugbar ist.

Ferner kann die Vorrichtung eingerichtet sein, nach erstmaligem Überschreiten des zweiten Schwellenwertes nach Aktivierung eines Dauerbremsbetriebs die zweite primäre Dauerbremseinrichtung zu aktivieren.

Ferner kann die Vorrichtung eingerichtet sein, die primäre Dauerbremse und die sekundäre Dauerbremse so anzusteuern, dass die sekundäre Dauerbremse, nachdem diese aktiviert wurde, bei einer nachfolgenden Verringerung der Dauerbremsen-Bremsanforderung länger als die Bremseinrichtungen der primären Dauerbremse aktiviert bleibt.

Ferner kann die Vorrichtung eingerichtet sein, eine nach einer Aktivierung der zweiten primären Dauerbremseinrichtung auftretende Verringerung der Dauerbremsen-Bremsanforderung solange durch die sekundäre Dauerbremse und/oder die erste primäre Dauerbremseinrichtung auszuregeln und den eingestellten zweiten Bremsmomentanteil konstant zu halten, bis der Wert der Dauerbremsen-Bremsanforderung unter einen Wert sinkt, der einer Höhe des momentan eingestellten zweiten Bremsmomentanteils der zweiten primären Dauerbremseinrichtung entspricht.

Die Erfindung betrifft ferner ein Kraftfahrzeug, insbesondere ein Nutzfahrzeug, mit einem Dauerbremssystem und einer Vorrichtung zur Steuerung oder Regelung des Dauerbremssystems wie jeweils in diesem Dokument offenbart.

Zur Vermeidung von Wiederholungen sollen rein verfahrensgemäß offenbarte Merkmale auch als funktionale Merkmale der Vorrichtung und somit als vorrichtungsgemäß offenbart gelten und beanspruchbar sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockdiagramm einer Vorrichtung gemäß einer Ausführungsform der Erfindung; und
- Figur 2: ein Zeitdiagram zur Illustration des Zusammenwirkens der primären und sekundären Dauerbremse gemäß einer Ausführungsform der Erfindung.

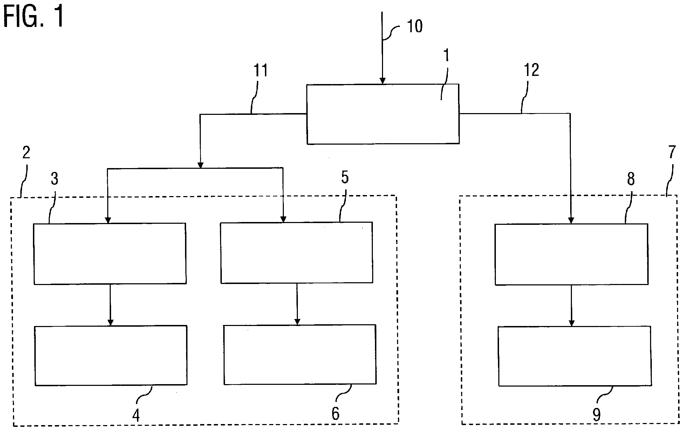

Figur 1 zeigt ein schematisches Blockdiagramm eines Dauerbremssystems und einer Vorrichtung zur Steuerung des Dauerbremssystems. Das Dauerbremssystem umfasst dabei in an sich bekannter Weise eine primäre Dauerbremse 2 und eine sekundäre Dauerbremse in Form eines Sekundärretarders 7.

Die primäre Dauerbremse weist eine erste primäre Dauerbremseinrichtung 4 zur Erzeugung eines einstellbaren ersten Bremsmomentanteils bzw. ersten Bremskraftanteils auf. Die erste primäre Dauerbremseinrichtung 4 umfasst beispielsweise eine Kombination aus einer Motorstaubremse und einer Dekompressionsbremse. Die Motorstaubremse regelt über eine Veränderung eines Anstellwinkels einer Motorstauklappe (sog. Auspuffklappe) einen Abgasgegendruck und damit die Motorbremsleistung. Mittels der Dekompressionsbremse kann die Motorbremswirkung durch das kurzzeitige Öffnen der Auslassventile des Zylinders gesteigert werden.

Bei kleinen Dauerbremsmomentvorgaben wird bei dieser Ausführungsvariante nur die Motorbremswirkung durch den Abgasgegendruck genutzt. Bei einer weiteren Erhöhung wird der zusätzliche Effekt durch die Dekompressionsbremse genutzt. Die Dekompressionsbremse kann in an sich bekannter Weise gasgesteuert über den erhöhten Abgasgegendruck bei zumindest teilweise geschlossener Bremsklappe initiiert werden, bei dem gezielt ein "Flattern" oder "Ventilspringen" der Auslassventile ausgelöst wird (siehe z. B. DE 10 2008 061 412 A1, auf die hinsichtlich der detaillierten Ausführung der abgasgesteuerten Dekompressionsbremse verwiesen wird).

Die primäre Dauerbremse weist ferner eine zweite primäre Dauerbremseinrichtung 6 zur Erzeugung eines einstellbaren zweiten Bremsmomentanteils bzw. zweiten Bremskraftanteils auf. Die zweite Dauerbremseinrichtung regelt mittels eines Ladedruckreglers 5 den Ladedruck durch entsprechende Steuerorgane, z. B. durch eine Drosselklappe im Ansaugsystem und/oder durch den Abgasturbolader. Hierbei weist die erste im Vergleich zur zweiten primären Dauerbremseinrichtung ein schnelleres Ansprechverhalten auf, d. h., die Reaktionszeit der ersten Dauerbremseinrichtung, d. h., wie schnell ein Bremsmoment in Reaktion auf eine Bremsmomentvorgabe aufgebaut werden kann, ist schneller als die der zweiten Dauerbremseinrichtung. Dies liegt daran, dass es länger dauert, den Ladedruck aufzubauen und wieder abzubauen.

Der Betrieb und das Bremsmoment des Sekundärretarders 7 werden über einen separaten Regler 8 geregelt, der das Stellglied 9 des Sekundärretarders 7 regelt. Die sekundäre Dauerbremse 2 kann ein hydrodynamischer Retarder sein, bei dem die Menge des einströmenden Öls über ein druckluftbetätigtes Steuerventil geregelt wird.

Das Nutzfahrzeug umfasst ferner eine Steuervorrichtung 1, die eingerichtet ist, eine Dauerbremsen-Bremsanforderung 10 zu erfassen und in Abhängigkeit von der Dauerbremsen-Bremsanforderung 10 die primäre Dauerbremse 2 und den Sekundärretarder 7 anzusteuern. Hierbei wird die erfasste Dauerbremsen-Bremsanforderung 10 in eine erste Bremsanforderung 11 für die primäre Dauerbremse und eine zweite Dauerbremsen-Bremsanforderung 12 für den Sekundärretarder von der Steuervorrichtung 1 aufgeteilt und an die Regler 3 und 5 bzw. 8 übermittelt. Die Dauerbremsen-Bremsanforderung 10 wird nachfolgend auch kurz als Bremsanforderung 10 bezeichnet.

Unter einer derartigen Steuervorrichtung 1 wird insbesondere jegliche Vorrichtung verstanden, die angeordnet und ausgebildet ist, um die primäre Dauerbremse und den Sekundärretarder 7 anzusteuern. Es muss sich dabei nicht um ein eigenständiges Bauteil handeln, es ist auch möglich, dass die Steuervorrichtung 1 integraler Bestandteil einer anderen Steuerung ist, beispielsweise einer zentralen Steuereinheit. Unter dem Erfassen der Dauerbremsen-Bremsanforderung 10 wird insbesondere jeder Vorgang verstanden, bei dem eine Information erfasst wird, aufgrund derer von der Steuervorrichtung 1 ein Verzögern des Fahrzeugs unter Verwendung des Dauerbremssystems einzuleiten ist. Es ist dabei möglich, nicht aber notwendig, dass die Dauerbremsen-Bremsanforderung 10 von einem Fahrerassistenzsystem, wie einem Fahrzeuglängsregelsystem (Tempopilot oder Bremsomat) ausgelöst wird oder manuell durch einen Fahrer durch eine Eingabevorrichtung eingestellt wird.

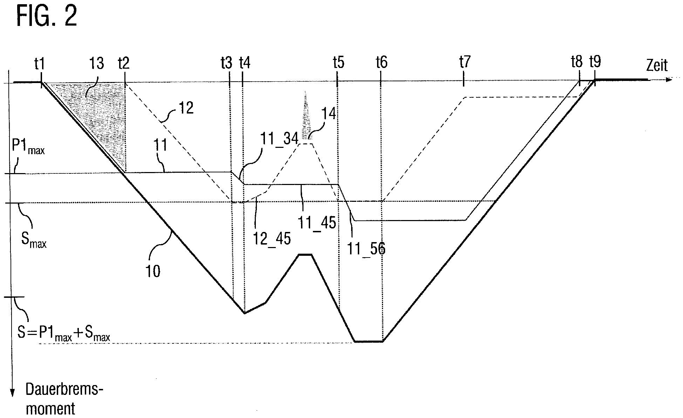

Die Funktionsweise der Steuervorrichtung 1 sowie ein Betriebsverfahren für das Dauerbremssystem werden nachfolgend anhand von Figur 2 erläutert. Hierbei entspricht die Abszissenachse der Zeitachse; die Ordinatenachse gibt die Höhe eines Bremsmoments bzw. einer Bremsmomentanforderung an. Figur 2 illustriert den zeitlichen Verlauf einer Dauerbremsen-Bremsanforderung 10. Ferner zeigt Figur 2 den zeitlichen Verlauf der von der Steuervorrichtung 1 erzeugten Dauerbremsen-Bremsanforderung für die primäre Dauerbremse, was in Figur 2 durch die mit dem Bezugszeichen 11 gekennzeichnete Kurve dargestellt ist. Der zeitliche Verlauf der von der Steuervorrichtung 1 erzeugten Dauerbremsen-Bremsanforderung für den Sekundärretarder 7 ist in Figur 2 durch die mit dem Bezugszeichen 12 gekennzeichnete Kurve dargestellt.

In der Betriebsphase vor dem Zeitpunkt t1 wird kein Dauerbremsmoment angefordert. Es herrscht kein Dauerbremsbetrieb. Zum Zeitpunkt t1 wird dann ein Dauerbremsbetrieb aufgrund eines Anstiegs der Dauerbremsen-Bremsanforderung 10 aktiviert und kann beispielsweise durch ein Fahrerlängsregelsystem bei Einfahrt in eine längere Gefällestrecke erzeugt werden.

In Figur 2 entspricht der Schwellenwert P1ₘₐₓ einem maximal von der ersten primären Dauerbremseinrichtung 4 der primären Dauerbremse 2 erzeugbaren Bremsmoment. Da das von der primären Dauerbremse erzeugbare Bremsmoment von der aktuellen Motordrehzahl abhängt, ist der Schwellenwert P1ₘₐₓ entsprechend ebenfalls motordrehzahlabhängig und wird fortlaufend in Abhängigkeit von der aktuellen Motordrehzahl neu berechnet.

Solange die Größe der Bremsanforderung 10 unterhalb des momentanen Schwellenwerts P1ₘₐₓ liegt, was im Zeitraum von t1 bis t2 der Fall ist, gibt die Steuervorrichtung 1 die erfasste Bremsanforderung 10 in voller Höhe in Form einer Bremsanforderung 11 an die primäre Dauerbremse 2 weiter. Die Regler 3 und 5 sind so eingerichtet, dass bei Bremsanforderungen 11 unterhalb des Schwellenwerts P1ₘₐₓ nur der schnelle Anteil 4 der primären Dauerbremse 2 angesteuert wird. Der Regler 5 steuert den langsamen Anteil 6 in diesen Fällen somit nicht an, so dass der langsame Anteil 6 der primären Dauerbremse nicht wirksam ist. Im Zeitraum t1 bis t2 wird die Bremsanforderung 10 somit komplett vom schnellen Anteil 4 der primären Dauerbremse aufgebracht. Der Sekundärretarder ist deaktiviert, d. h. trägt aktuell kein Bremsmoment bei. Dies bietet ferner den Vorteil, dass ein vergleichsweise kleiner Wärmeeintrag ins Kühlsystem des Fahrzeugs erfolgt, da der Wärmeeintrag der primären Dauerbremse im Vergleich zum Sekundärretarder gering ist. Der Wärmeeintrag zwischen t1 und t2 korreliert mit der Fläche 13.

Wenn die Bremsanforderung 10 den ersten Schwellenwert P1ₘₐₓ erstmalig im Zeitpunkt t2 überschreitet, d. h. erstmalig nach der im Zeitpunkt t1 zuletzt erfolgten Aktivierung des Dauerbremsbetriebs, wird der Sekundärretarder aktiviert, der das restliche Bremsmoment ausregelt, d. h. einen den Schwellenwert P1ₘₐₓ übersteigenden Anteil der Bremsanforderung 10 ausregelt.

Diese Ausregelung durch den Sekundärretarder erfolgt zumindest so lange, bis die Bremsanforderung 10 durch einen weiteren Anstieg einen Wert erreicht, der durch das Zusammenwirken der ersten primären Dauerbremseinrichtung 4 mit dem Sekundärretarder 7 nicht mehr erzeugbar ist. Dieser Punkt wird in dem Beispiel der Figur 2 zum Zeitpunkt t3 erreicht. Hier erreicht die Bremsanforderung 10 einen Wert S, der einer Summe aus P1ₘₐₓ und Sₘₐₓ entspricht, wobei Sₘₐₓ einem maximal vom Sekundärretarder erzeugbaren Bremsmoment entspricht.

Im Zeitraum zwischen t2 und t3 steigt somit der von der Steuervorrichtung 1 an den Sekundärretarder 7 übermittelte Bremsmomentanteil 12 von null auf Sₘₐₓ an. Mit anderen Worten teilt die Steuervorrichtung 1 im Zeitraum t2 bis t3 hierzu die Bremsanforderung 10 in einen ersten Anteil 11 mit dem Wert P1ₘₐₓ und in einen zweiten Anteil 12, der an den Regler 8 des Sekundärretarders geschickt wird, auf. Der Wert des zweiten Anteils 12 entspricht dem aktuellen Wert der Bremsanforderung 10 minus P1ₘₐₓ.

Zwischen t3 und t4 steigt der Wert der Bremsanforderung 10 weiter an. Entsprechend erhöht die Steuervorrichtung 1 den Wert des Anteils 11 (siehe Teilabschnitt 11_34 des Bremsmomentverlaufs 11 der primären Dauerbremse zwischen den Punkten t3 und t4) und lässt den Anteil 12 konstant. In Folge dessen steuert der Regler 5 den langsamen Anteil der primären Dauerbremse an, so dass dieser denjenigen Anteil der Bremsanforderung 11 beiträgt, der über den Wert von P1ₘₐₓ hinausgeht.

Ist der Sekundärretarder 7 erst einmal wirksam, dann soll dieser bei Verringerung der Bremsanforderung 10 so lange wie möglich, insbesondere länger als die primäre Dauerbremse, angesteuert bleiben, um Aus- und Wiedereinschaltvorgänge zu vermeiden. Ferner gilt, dass wenn der langsame Anteil 6 der primären Dauerbremse erst einmal wirksam ist, dann soll dieser, auch wenn die Bremsanforderung 10 sinkt, so lange wie möglich seinen Wert halten, um Aus- und Wiedereinschaltvorgänge mit hohem Verzug zu vermeiden.

Entsprechend werden Schwankungen der Bremsanforderung 10 im Abschnitt t4 und t5 durch den Sekundärretarder 7 ausgeregelt, so dass der Bremsmomentanteil 11 der primären Dauerbremse im Zeitraum t4 und t5 konstant gehalten werden kann, was durch den horizontal verlaufenden Abschnitt 11_45 zwischen t4 und t5 dargestellt ist. Entsprechend hält die Steuervorrichtung 1 den Anteil 11 der Bremsanforderung 10 in diesem Zeitraum konstant und moduliert nur den Anteil 12 des Sekundärretarders, was durch den Abschnitt 12_45 dargestellt ist. Hier kann ferner ausgenutzt werden, dass der Sekundärretarder schnell und fein regelbar ist. Im Bereich 14 wird ein Wärmeeintrag durch den kleinen Bremsmomentanteil des Sekundärretarders verringert.

Im Zeitpunkt t5 erreicht der Bremsmomentanteil 12 des Sekundärretarders wieder seinen Maximalwert Sₘₐₓ. In Folge dessen wird der weitere Anstieg der Bremsanforderung 10 wiederum durch den langsamen Anteil der primären Dauerbremse aufgebracht, was durch den Anstieg des Kurvenabschnitts 11_56 illustriert ist. Im Zeitraum t5 bis t6 hält die Steuervorrichtung 1 somit den Bremsmomentanteil 12 des Sekundärretarders konstant und erhöht stattdessen den Anteil 11 der primären Dauerbremse, worauf der Regler 5 ein entsprechend erhöhtes Bremsmoment durch Anpassung des Ladedrucks einstellt, da der schnelle Anteil bereits seinen maximal erzeugbaren Anteil P1ₘₐₓ beisteuert.

Im Zeitpunkt t6 sinkt die Bremsanforderung 10 wieder ab. Damit der schnelle Anteil der primären Dauerbremse möglichst lange konstant gehalten werden kann, wird stattdessen der Bremsmomentanteil des Sekundärretarders heruntergeregelt, was durch eine entsprechende von der Steuervorrichtung 1 durchgeführte Reduzierung der Bremsmomentanforderung 12 erfolgt.

Vorstehend wurde bereits erwähnt, dass der Sekundärretarder nach Aktivierung so lange wie möglich, insbesondere länger als die primäre Dauerbremse, angesteuert bleiben soll, um Aus- und Wiedereinschaltvorgänge zu vermeiden. Fällt der Bremsmomentanteil 12 des Sekundärretarders auf einen vorgegebenen Mindestwert, was im Zeitpunkt t7 der Fall ist, dann teilt die Steuervorrichtung 1 die Bremsanforderung 10 anschließend so auf, dass der Bremsmomentanteil des Sekundärretarders so lange konstant bleibt, wie die primäre Dauerbremse noch wirksam ist, und dass eine weitere Verringerung der Bremsanforderung 10 durch eine entsprechende Verringerung des Bremsmomentanteils der primären Dauerbremse aufgebracht wird. Folglich sinkt nach dem Zeitpunkt t7 die Bremsmomentvorgabe 11 der primären Dauerbremse 2, während die Bremsmomentvorgabe 12 an den Sekundärretarder 7 konstant bleibt. Erst nachdem die primäre Dauerbremse zum Zeitpunkt t8 aufgrund einer weiteren Verringerung der Bremsanforderung 10 deaktiviert wird, wird anschließend die Bremsmomentvorgabe 11 an den Sekundärretarder verringert, so dass dieser im Zeitpunkt t9 ausgeschaltet wird.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

1 Steuervorrichtung
2 Primäre Dauerbremse
3 Regler des schnellen Anteils der primären Dauerbremse
4 Schneller Anteil der primären Dauerbremse (erste Dauerbremseinrichtung)
5 Regler des langsamen Anteils der primären Dauerbremse
6 Langsamer Anteil der primären Dauerbremse (zweite Dauerbremseinrichtung)
7 Sekundärretarder
8 Regler des Sekundärretarders
9 Stellglied des Sekundärretarders
10 Dauerbremsen-Bremsanforderung
11 Dauerbremsen-Bremsanforderung an primäre Dauerbremse
12 Dauerbremsen-Bremsanforderung an Sekundärretarder
13 Fläche korrelierend zum Wärmeeintrag
14 Lokales Minimum des Wärmeeintrags durch den Sekundärretarder
P1ₘₐₓ Maximal vom schnellen Anteil der primären Dauerbremse erzeugbare Bremsmomente
Sₘₐₓ Maximales vom Sekundärretarder erzeugbares Bremsmoment

## Patentansprüche

1. Betriebsverfahren für ein Dauerbremssystem eines Kraftfahrzeugs,
(a) wobei das Dauerbremssystem eine primäre Dauerbremse (2) und eine sekundäre Dauerbremse (7) aufweist, wobei die sekundäre Dauerbremse ein Sekundärretarder ist,
(a1) wobei die primäre Dauerbremse (2) eine erste primäre Dauerbremseinrichtung (4) zur Erzeugung eines einstellbaren ersten Bremsmomentanteils und eine zweite primäre Dauerbremseinrichtung (6) zur Erzeugung eines einstellbaren zweiten Bremsmomentanteils aufweist, wobei die erste (4) im Vergleich zur zweiten (6) primären Dauerbremseinrichtung ein schnelleres Ansprechverhalten aufweist und
(a2) wobei mittels der sekundären Dauerbremse (7) ein dritter Bremsmomentanteil einstellbar ist,
**dadurch gekennzeichnet,**
(b) **dass** in einem Zeitraum nach Aktivierung eines Dauerbremsbetriebs und bis eine Dauerbremsen-Bremsanforderung (10) nach Aktivierung des Dauerbremsbetriebs einen ersten Schwellenwert (P1ₘₐₓ) erstmalig überschreitet, die Dauerbremsen-Bremsanforderung von der ersten primären Dauerbremseinrichtung (4) aufgebracht wird, wobei der erste Schwellenwert (P1ₘₐₓ) so festgelegt ist, dass er einem Wert entspricht, der kleiner oder gleich einem maximal von der ersten primären Dauerbremseinrichtung (4) erzeugbaren Bremsmoment ist, und
(c) **dass** nachdem die Dauerbremsen-Bremsanforderung den ersten Schwellenwert (P1ₘₐₓ) erstmalig überschritten hat und solange die Dauerbremsen-Bremsanforderung (10) einen zweiten Schwellenwert (S) nach Aktivierung eines Dauerbremsbetriebs noch nicht überschritten hat, ein den ersten Schwellenwert (P1ₘₐₓ) übersteigender Anteil der Dauerbremsen-Bremsanforderung (10) durch die sekundäre Dauerbremse (7) aufgebracht wird, wobei der zweite Schwellenwert (S) so festgelegt ist, dass er einem Wert entspricht, der kleiner oder gleich einem Bremsmoment ist, das bei einem Zusammenwirken der ersten primären Dauerbremseinrichtung (4) mit der sekundären Dauerbremse (7) maximal erzeugbar ist.

2. Betriebsverfahren nach Anspruch 1, **dadurch gekennzeichnet, dass** nach erstmaligem Überschreiten des zweiten Schwellenwertes (S) nach Aktivierung eines Dauerbremsbetriebs die zweite primäre Dauerbremseinrichtung (7) aktiviert wird.

3. Betriebsverfahren nach Anspruch 1 oder 2, **dadurch gekennzeichnet, dass** nach der Aktivierung der sekundären Dauerbremse (7) dieser bei einer nachfolgenden Verringerung der Dauerbremsen-Bremsanforderung (10) länger als die Bremseinrichtungen (4, 6) der primären Dauerbremse (2) aktiviert bleibt.

4. Betriebsverfahren nach einem der vorhergehenden Ansprüche, **dadurch gekennzeichnet, dass** eine nach einer Aktivierung der zweiten primären Dauerbremseinrichtung (7) auftretende Verringerung der Dauerbremsen-Bremsanforderung (10) solange durch die sekundäre Dauerbremse (7) und/oder durch die erste primäre Dauerbremseinrichtung (4) ausgeregelt wird und der eingestellte zweite Bremsmomentanteil konstant bleibt, bis der Wert der Dauerbremsen-Bremsanforderung (10) unter einen Wert sinkt, der einer Höhe des momentan eingestellten zweiten Bremsmomentanteils der zweiten primären Dauerbremseinrichtung (6) entspricht.

5. Betriebsverfahren nach einem der vorhergehenden Ansprüche, **dadurch gekennzeichnet,**
(a) **dass** die erste primäre Motorbremseinrichtung (4) eine Motorstaubremse zum Aufbau eines Abgasgegendrucks und eine Dekompressionsbremse umfasst; und/oder
(b) **dass** die zweite primäre Motorbremseinrichtung (6) ausgebildet ist, ein Motorbremsmoment über eine Veränderung eines Ladedrucks einer aufgeladenen Brennkraftmaschine zu erzeugen.

6. Vorrichtung (1) zur Steuerung oder Regelung für ein Dauerbremssystem eines Kraftfahrzeugs,
(a) wobei das Dauerbremssystem eine primäre Dauerbremse (2) und eine sekundäre Dauerbremse (7), nämlich einen Sekundärretarder, aufweist,
(a1) wobei die primäre Dauerbremse (7) eine erste primäre Dauerbremseinrichtung (4) zur Erzeugung eines einstellbaren ersten Bremsmomentanteils und eine zweite primäre Dauerbremseinrichtung (6) zur Erzeugung eines einstellbaren zweiten Bremsmomentanteils aufweist, wobei die erste (4) im Vergleich zur zweiten (6) primären Dauerbremseinrichtung ein schnelleres Ansprechverhalten aufweist, und
(a2) wobei mittels der sekundären Dauerbremse (7) ein dritter Bremsmomentanteil einstellbar ist,
**dadurch gekennzeichnet, dass** die Vorrichtung (1) eingerichtet ist, in Abhängigkeit von einer Dauerbremsen-Bremsanforderung (10) die primäre Dauerbremse (2) und die sekundäre Dauerbremse (7) so anzusteuern,
(b) dass in einem Zeitraum nach Aktivierung eines Dauerbremsbetriebs und bis eine Dauerbremsen-Bremsanforderung (10) nach Aktivierung des Dauerbremsbetriebs einen ersten Schwellenwert (P1ₘₐₓ) erstmalig überschreitet, die Dauerbremsen-Bremsanforderung von der ersten primären Dauerbremseinrichtung (4) aufgebracht wird, wobei der erste Schwellenwert (P1ₘₐₓ) so festgelegt ist, dass er einem Wert entspricht, der kleiner oder gleich einem maximal von der ersten primären Dauerbremseinrichtung (4) erzeugbaren Bremsmoment ist, und
(c) dass, nachdem die Dauerbremsen-Bremsanforderung (10) den ersten Schwellenwert (P1ₘₐₓ) erstmalig überschritten hat und solange die Dauerbremsen-Bremsanforderung einen zweiten Schwellenwert (S) nach Aktivierung eines Dauerbremsbetriebs noch nicht überschritten hat, ein den ersten Schwellenwert (P1ₘₐₓ) übersteigender Anteil der Dauerbremsen-Bremsanforderung (10) durch die sekundäre Dauerbremse (7) aufgebracht wird, wobei der zweite Schwellenwert (S) so festgelegt ist, dass er einem Wert entspricht, der kleiner oder gleich einem Bremsmoment ist, das bei einem Zusammenwirken der ersten primären Dauerbremseinrichtung (4) mit der sekundären Dauerbremse (7) maximal erzeugbar ist.

7. Vorrichtung (1) nach Anspruch 6, **dadurch gekennzeichnet, dass** die Vorrichtung eingerichtet ist, nach erstmaligem Überschreiten des zweiten Schwellenwertes (S) nach Aktivierung eines Dauerbremsbetriebs die zweite primäre Dauerbremseinrichtung (7) zu aktivieren.

8. Vorrichtung nach Anspruch 6 oder 7, **dadurch gekennzeichnet, dass** die Vorrichtung eingerichtet ist, die primäre Dauerbremse (2) und die sekundäre Dauerbremse (7) so anzusteuern, dass die sekundäre Dauerbremse (7), nachdem dieser aktiviert wurde, bei einer nachfolgenden Verringerung der Dauerbremsen-Bremsanforderung (10) länger als die Bremseinrichtungen (4, 6) der primären Dauerbremse (2) aktiviert bleibt.

9. Vorrichtung (1) nach einem der Ansprüche 6 bis 8, **dadurch gekennzeichnet, dass** die Vorrichtung eingerichtet ist, eine nach einer Aktivierung der zweiten primären Dauerbremseinrichtung (7) auftretende Verringerung der Dauerbremsen-Bremsanforderung (10) solange durch die sekundäre Dauerbremse (7) und/oder die erste primäre Dauerbremseinrichtung (4) auszuregeln und den eingestellten zweiten Bremsmomentanteil konstant zu halten, bis der Wert der Dauerbremsen-Bremsanforderung (10) unter einen Wert sinkt, der einer Höhe des momentan eingestellten zweiten Bremsmomentanteils der zweiten primären Dauerbremseinrichtung (6) entspricht.

10. Nutzfahrzeug, insbesondere Kraftfahrzeug, mit einer Vorrichtung (1) nach einem der Ansprüche 6 bis 9.

## Claims

1. Operating method for a permanent brake system of a motor vehicle,
(a) wherein the permanent brake system has a primary permanent brake (2) and a secondary permanent brake (7), wherein the secondary permanent brake is a secondary retarder,
(a1) wherein the primary permanent brake (2) has a first primary permanent brake device (4) for generating an adjustable first braking torque component and a second primary permanent brake device (6) for generating an adjustable second braking torque component, wherein the first primary permanent brake device (4) has a more rapid response behaviour compared to the second primary permanent brake device (6), and
(a2) wherein a third braking torque component can be adjusted by means of the secondary permanent brake (7),
**characterized**
(b) **in that** the permanent-brake braking request is applied by the first primary permanent brake device (4) in a time period after the activation of a permanent brake mode and until a permanent-brake braking request (10) exceeds a first threshold value (P1ₘₐₓ) for the first time after the activation of the permanent brake mode, wherein the first threshold value (P1ₘₐₓ) is defined in such a way that it corresponds to a value which is less than or equal to a maximum braking torque which can be generated by the first primary permanent brake device (4), and
(c) **in that** after the permanent-brake braking request has exceeded the first threshold value (P1ₘₐₓ) for the first time and as long as the permanent-brake braking request (10) has not yet exceeded a second threshold value (S) after the activation of a permanent brake mode, a component of the permanent-brake braking request (10) which exceeds the first threshold value (P1ₘₐₓ) is applied by the secondary permanent brake (7), wherein the second threshold value (S) is defined in such a way that it corresponds to a value which is less than or equal to a braking torque which is the maximum which can be generated when the first primary permanent brake device (4) interacts with the secondary permanent brake (7).

2. Operating method according to Claim 1, **characterized in that** after the second threshold value (S) is exceeded for the first time after the activation of a permanent brake mode, the second primary permanent brake device (7) is activated.

3. Operating method according to Claim 1 or 2, **characterized in that** after the activation of the secondary permanent brake (7), in the case of a subsequent reduction in the permanent-brake braking request (10) said secondary permanent brake (7) remains activated for longer than the brake devices (4, 6) of the primary permanent brake (2).

4. Operating method according to one of the preceding claims, **characterized in that** a reduction in the permanent-brake braking request (10) which occurs after activation of the second primary permanent brake device (7) is corrected by means of the secondary permanent brake (7) and/or by means of the first primary permanent brake device (4) and the second braking torque component which has been set remains constant until the value of the permanent-brake braking request (10) drops below a value which corresponds to a level of the instantaneously set, second braking torque component of the second primary permanent brake device (6).

5. Operating method according to one of the preceding claims, **characterized**
(a) **in that** the first primary engine brake device (4) comprises an engine exhaust brake for building up an exhaust gas back pressure and a decompression brake; and/or
(b) **in that** the second primary engine brake device (6) is designed to generate an engine braking torque by changing a charge pressure of a supercharged internal combustion engine.

6. Device (1) for performing open-loop or closed-loop control for a permanent brake system of a motor vehicle,
(a) wherein the permanent brake system has a primary permanent brake (2) and a secondary permanent brake (7), namely a secondary retarder,
(a1) wherein the primary permanent brake (7) has a first primary permanent brake device (4) for generating an adjustable first braking torque component and a second primary permanent brake device (6) for generating an adjustable second braking torque component, wherein the first primary permanent brake device (4) has a more rapid response behaviour compared to the second primary permanent brake device (6), and
(a2) wherein a third braking torque component can be adjusted by means of the secondary permanent brake (7),
**characterized in that** the device (1) is configured to actuate the primary permanent brake (2) and the secondary permanent brake (7) as a function of a permanent-brake braking request (10) in such a way
(b) that the permanent-brake braking request is applied by the first primary permanent brake device (4) in a time period after the activation of a permanent brake mode and until a permanent-brake braking request (10) exceeds a first threshold value (P1ₘₐₓ) for the first time after the activation of the permanent brake mode, wherein the first threshold value (P1ₘₐₓ) is defined in such a way that it corresponds to a value which is less than or equal to a maximum braking torque which can be generated by the first primary permanent brake device (4), and
(c) that after the permanent-brake braking request (10) has exceeded the first threshold value (P1ₘₐₓ) for the first time and as long as the permanent-brake braking request has not yet exceeded a second threshold value (S) after the activation of a permanent brake mode, a component of the permanent-brake braking request (10) which exceeds the first threshold value (P1ₘₐₓ) is applied by the secondary permanent brake (7), wherein the second threshold value (S) is defined in such a way that it corresponds to a value which is less than or equal to a braking torque which is the maximum which can be generated when the first primary permanent brake device (4) interacts with the secondary permanent brake (7).

7. Device (1) according to Claim 6, **characterized in that** the device is configured to activate the second primary permanent brake device (7) after the second threshold value (S) has been exceeded for the first time after activation of a permanent brake mode.

8. Device according to Claim 6 or 7, **characterized in that** the device is configured to actuate the primary permanent brake (2) and the secondary permanent brake (7) in such a way that after the secondary permanent brake (7) has been activated, in the case of a subsequent reduction in the permanent-brake braking request (10) said secondary permanent brake (7) remains activated for longer than the brake devices (4, 6) of the primary permanent brake (2).

9. Device (1) according to one of Claims 6 to 8, **characterized in that** the device is configured to correct a reduction in the permanent-brake braking request (10), occurring after activation of the second primary permanent brake device (7), by means of the secondary permanent brake (7) and/or the first primary permanent brake device (4) and to keep constant the second braking torque component which is set, until the value of the permanent-brake braking request (10) drops below a value which corresponds to a level of the instantaneously set, second braking torque component of the second primary permanent brake device (6).

10. Utility vehicle, in particular a motor vehicle, having a device (1) according to one of Claims 6 to 9.

## Revendications

1. Procédé de fonctionnement pour un système de freinage continu d'un véhicule automobile :
(a) le système de freinage continu comportant un frein continu principal (2) et un frein continu secondaire (7), le frein continu secondaire étant un retardateur secondaire ;
(a1) le frein continu principal (2) comportant un premier dispositif de freinage continu principal (4) pour produire une première partie de couple de freinage réglable et un deuxième dispositif de freinage continu principal (6) pour produire une deuxième partie de couple de freinage réglable, le premier dispositif de freinage continu principal (4) présentant un comportement de réponse plus rapide que le deuxième dispositif de freinage continu principal (6) ; et
(a2) une troisième partie de couple de freinage pouvant être réglée à l'aide du frein continu secondaire (7) ; **caractérisé en ce que** :
(b) pendant un laps de temps après l'activation d'un fonctionnement en freinage continu et jusqu'à une demande de freinage continu (10) après l'activation du fonctionnement en freinage continu, une première valeur seuil (P1ₘₐₓ) est dépassée pour la première fois, la demande de freinage continu est amenée par le premier dispositif de freinage continu principal (4), la première valeur seuil (P1ₘₐₓ) étant déterminée de telle sorte qu'elle corresponde à une valeur inférieure ou égale à un couple de freinage pouvant être produit au maximum par le premier dispositif de freinage continu principal (4) ; et
(c) une fois que la demande de freinage continu a dépassé la première valeur seuil (P1ₘₐₓ) pour la première fois et tant que la demande de freinage continu (10) ne dépasse pas encore une deuxième valeur seuil (S) après l'activation d'un fonctionnement en freinage continu, une partie dépassant la première valeur seuil (P1ₘₐₓ) de la demande de freinage continu (10) est amenée par le frein continu secondaire (7), la deuxième valeur seuil (S) étant déterminée de telle sorte qu'elle corresponde à une valeur inférieure ou égale à un couple de freinage pouvant être produit au maximum en cas d'interaction du premier dispositif de freinage continu principal (4) avec le frein continu secondaire (7).

2. Procédé de fonctionnement selon la revendication 1, **caractérisé en ce que** le deuxième dispositif de freinage continu principal (7) est activé après le premier dépassement de la deuxième valeur seuil (S) après l'activation d'un fonctionnement en freinage continu.

3. Procédé de fonctionnement selon la revendication 1 ou 2, **caractérisé en ce qu'**après l'activation du frein continu secondaire (7), celui-ci reste activé en cas de diminution suivante de la demande de freinage continu (10) plus longue que les dispositifs de freinage (4, 6) du frein continu principal (2).

4. Procédé de fonctionnement selon l'une quelconque des revendications précédentes, **caractérisé en ce qu'**une diminution de la demande de freinage continu (10) survenant après une activation du deuxième dispositif de freinage continu principal (7) est réglée par le frein continu secondaire (7) et/ou par le premier dispositif de freinage continu principal (4) et la deuxième partie de couple de freinage réglée restant constante, jusqu'à ce que la valeur de la demande de freinage continu (10) passe en dessous d'une valeur correspondant à une hauteur de la deuxième partie de couple de freinage, momentanément réglée, du deuxième dispositif de freinage continu principal (6).

5. Procédé de fonctionnement selon l'une quelconque des revendications précédentes, **caractérisé en ce que** :
(a) le premier dispositif de frein moteur principal (4) comprend un frein d'échappement de moteur pour utiliser une contre-pression de gaz d'échappement et un frein de décompression ; et/ou
(b) le deuxième dispositif de frein-moteur principal (6) est réalisé pour produire un couple de frein moteur via une variation de la pression de charge d'un moteur à combustion interne suralimenté.

6. Dispositif (1) de commande ou de réglage d'un système de freinage continu d'un véhicule automobile :
(a) le système de freinage continu comportant un frein continu principal (2) et un frein continu secondaire (7), notamment un retardateur secondaire ;
(a1) le frein continu principal (7) comportant un premier dispositif de freinage continu principal (4) pour produire une première partie de couple de freinage réglable et un deuxième dispositif de freinage continu principal (6) pour produire une deuxième partie de couple de freinage réglable, le premier dispositif de freinage continu principal (4) présentant un comportement de réponse plus rapide que le deuxième dispositif de freinage continu principal (6) ; et
(a2) une troisième partie de couple de freinage pouvant être réglée à l'aide du frein continu secondaire (7) ; **caractérisé en ce que** le dispositif (1) est conçu pour commander de telle sorte le frein continu principal (2) et le frein continu secondaire (7) en fonction d'une demande de freinage continu (10) que :
(b) pendant un laps de temps après l'activation d'un fonctionnement en freinage continu et jusqu'à une demande de freinage continu (10) après l'activation du fonctionnement en freinage continu, une première valeur seuil (P1ₘₐₓ) est dépassée pour la première fois, la demande de freinage continu est amenée par le premier dispositif de freinage continu principal (4), la première valeur seuil (P1ₘₐₓ) étant déterminée de telle sorte qu'elle corresponde à une valeur inférieure ou égale à un couple de freinage pouvant être produit au maximum par le premier dispositif de freinage continu principal (4) ; et
(c) une fois que la demande de freinage continu (10) a dépassé la première valeur seuil (P1ₘₐₓ) pour la première fois et tant que la demande de freinage continu ne dépasse pas encore une deuxième valeur seuil (S) après l'activation d'un fonctionnement en freinage continu, une partie dépassant la première valeur seuil (P1ₘₐₓ) de la demande de freinage continu (10) est amenée par le frein continu secondaire (7), la deuxième valeur seuil (S) étant déterminée de telle sorte qu'elle corresponde à une valeur inférieure ou égale à un couple de freinage pouvant être produit au maximum en cas d'interaction du premier dispositif de freinage continu principal (4) avec le frein continu secondaire (7) .

7. Dispositif (1) selon la revendication 6, **caractérisé en ce que** le dispositif est conçu pour activer le deuxième dispositif de freinage continu principal (7) après le premier dépassement de la deuxième valeur seuil (S) après l'activation d'un fonctionnement en freinage continu.

8. Dispositif selon la revendication 6 ou 7, **caractérisé en ce que** le dispositif est conçu pour commander le frein continu principal (2) et le frein continu secondaire (7) de telle sorte que le frein continu secondaire (7), une fois activé, reste activé en cas de diminution suivante de la demande de freinage continu (10) plus longue que les dispositifs de freinage (4, 6) du frein continu principal (2).

9. Dispositif (1) selon l'une quelconque des revendications 6 à 8, **caractérisé en ce que** le dispositif est conçu pour régler une diminution de la demande de freinage continu (10) survenant après une activation du deuxième dispositif de freinage continu principal (7) par le frein continu secondaire (7) et/ou le premier dispositif de freinage continu principal (4) et pour maintenir constante la deuxième partie de couple de freinage réglée, jusqu'à ce que la valeur de la demande de freinage continu (10) passe en dessous d'une valeur correspondant à une hauteur de la deuxième partie de couple de freinage, momentanément réglée, du deuxième dispositif de freinage continu principal (6).

10. Véhicule utilitaire, notamment véhicule automobile, avec un dispositif (1) selon l'une quelconque des revendications 6 à 9.
